Europäisches Patentamt

European Patent Office

Office européen des brevets

(11) Publication number: **0 047 124**
**B1**

(12) **EUROPEAN PATENT SPECIFICATION**

(45) Date of publication of patent specification: **02.01.86**

(21) Application number: **81303883.3**

(22) Date of filing: **25.08.81**

(51) Int. Cl.⁴: **C 10 L 11/00**, C 10 L 5/40, C 10 L 7/02

(54) **Combustible compositions and methods for producing them.**

(30) Priority: **01.09.80 GB 8028162**

(43) Date of publication of application:
**10.03.82 Bulletin 82/10**

(45) Publication of the grant of the patent:
**02.01.86 Bulletin 86/01**

(84) Designated Contracting States:
**AT BE CH DE FR GB IT LI LU NL SE**

(56) References cited:
**EP-A-0 037 232**
**FR-A-1 555 995**
**US-A-3 338 691**
**US-A-4 165 968**

(73) Proprietor: **RECKITT AND COLMAN PRODUCTS LIMITED**
**P.O. Box 26 1-17, Burlington Lane**
**London W4 2RW (GB)**

(72) Inventor: **Fox, Rodney Thomas**
**37, South Street**
**Cottingham North Humberside (GB)**
Inventor: **Coan, Brian**
**59, Southfield Drive**
**Ferriby Hull (GB)**

(74) Representative: **Hardisty, David Robert et al**
**BOULT, WADE & TENNANT 27 Furnival Street**
**London EC4A IPQ (GB)**

Courier Press, Leamington Spa, England.

**Description**

The present invention relates to combustible compositions and includes compositions which in relatively small pieces are useful as firelighters as well as compositions which may be used to make artificial firelogs. The compositions of the invention may also be used as fuel.

Known combustible compositions include those compositions which are used as firelighters, charcoal igniters and artificial fire logs. Certain of these compositions comprise fuel in the form of a wax, gel or paste, optionally filled with organic, combustible solids such as wood waste, (e.g. wood flour or wood shavings).

Compositions of that kind are often referred to as "brown firelighters" since the presence of the combustible filler generally gives rise to a brown colouration.

A very popular type of firelighter composition is the type generally known as "white firelighter". This is generally composed of a liquid oil fuel such as kerosene encapsulated in pores in a block of solid resin, e.g. urea-formaldehyde resin. The product is made by forming an oil-in-water emulsion in which the aqueous phase contains precursors for the resin, which aqueous phase is then set to form the product.

The manufacture of this type of product presently involves the liberation of formaldehyde, a known irritant and use of this material is undesirable.

Typically, "white firelighter" is superior to "brown" in terms of the length of time the composition burns for a given fuel content. Also the white colour has become associated with firelighters.

We have now found that a combustible composition which does not contain a formaldehyde based resin can provide burning characteristics which approach those of "white firelighters" and can if desired be white in colour.

The present invention provides a block of a combustible composition comprising a gelled liquid or liquefiable fuel filled with expanded perlite and preferably substantially free of combustible filler materials.

A composition according to the invention may be similar to a conventional "brown firelighter" composition except that expanded perlite replaces the organic, combustible solid used as filler.

The liquid fuel may be gelled by means of a suitable thickener such as metal soap including aluminium stearates and octanoates, carboxymethyl cellulose, hydroxymethyl cellulose, hydroxypropyl cellulose, nitrocellulose, gums such as xanthan, arabic, tragacanth, shellacs, rosin, lignosulphates, tall oil cuts, quebracho extracts, caseinates, gelatin, higher alcohols, synthetic polymers such as polybutanols, ethylene copolymers, polyvinyl alcohols, polyvinyl acetate, vinyl cellulose, polyketones, polyesters, phenoxy resins, polymeric diols, vinyl butyral resins, vinyl acetate/polyvinyl chloride copolymers, N-coco-hydroxy-butyramide, polyamides and inorganics such as silica xerogel (known as "fumed silica"), thickening clays such as bentonite, laponite, montmorillonite and mixtures thereof.

Other inorganic materials may be incorporated as additional fillers. Examples of materials which may be used in conjunction with expanded perlite are chalk, china clay, diatomaceous earth, perlite rock, sand, Fillite which is a particulate solid separated from boiler ash and has the form of microspheres, vermiculite, talc, and exfoliated vermiculite.

Of course, the use of some of these additional fillers may be inconsistent with obtaining a white product.

Preferably, the density of any such supplementary inorganic non-combustible particulate solids is similar to or less than that of the liquefiable fuel component. More preferably, the density of the solid is much less than that of the liquefiable fuel component.

Preferably, the particles of the perlite and any supplementary inorganic solid are impermeable to liquids, that is to say, the fuel cannot completely penetrate the interior of the particles. This may be achieved by coating the perlite with a barrier material which may be a polymeric coating composition such as an alkyd resin or nitrocellulose or a heavy metal soap, a silicone, a silicate, or an oil such as a viscous non-drying oil or a drying oil.

The amount of expanded perlite that may be included is up to 12% w/w of the total composition. Preferably, the amount is less than 8% w/w and 1% to 6% w/w is especially preferred.

It is preferred that the expanded perlite be of relatively small particle size, e.g. about 0.8 mm or less and of relatively low bulk density, e.g. from 40 to 60 kg/m$^3$. Johns Manville grade EUP/100/28 is of this preferred type.

The composition according to the invention may generally be used as firelighters or charcoal igniters.

The compositions may suitably be made into artificial firelogs.

The composition of the invention may be prepared in a variety of ways depending upon whether the final product is to be used as an ignition product for fires on the one hand or barbeque starters on the other hand or an artificial firelog. The manufacture of such product types is well understood and the incorporation of the expanded perlite may be effected by mixing at a suitable stage. Preferably the expanded perlite is added shortly before the product becomes set into block form or set enough to be cut into blocks. This leaves the minimum time of contact between liquid fuel and the perlite and hence minimises absorption of the fuel by the perlite.

Generally therefore it is preferred that the gel is formed first from suitable components that is a thickener as disclosed above, preferably fumed silica or a soap and fuel component in liquid form, for example an alcohol or kerosene. The expanded perlite may then be admixed therewith with stirring to achieve uniform distribution. However, the expanded perlite may be dispersed in the fuel whilst it is in the liquid form and then the mixture may be gelled as by addition of soap or its formation in situ. It has been observed that the final product is often of stiffer consistency than the initially formed gel.

When soap is used for gelling, it is preferably a $C_{12}$—$C_{18}$ fatty acid derived soap. Preferably the soap is a saturated one since these give firmer gels. An example of a preferred material is sodium stearate. Heaver metal soaps such as aluminium stearate may additionally or alternatively be used. The fuel does not have to be normally liquid and materials such as slack wax may be gelled with soap. Preferred proportions of fuel and soap are 3 to 25% by weight soap, more preferably 8 to 15% by weight soap, based on the weight of fuel and soap.

The freshly formed composition may be allowed to stand until of satisfactory consistency to be cut into blocks subsequently. Alternatively, the mixture may be moulded into individual blocks and wrapped when set to handleable consistency. Another means of presenting the product is in sealed envelopes which closely fit the outer surfaces of the blocks when set.

Where such a composition is to be used as an artificial firelog suitably large pieces may be moulded as by extrusion or compaction and optionally wrapped.

Combustible compositions of the present invention are preferably match ignitable.

The invention will now be illustrated by the following examples in which parts are by weight:—

Example 1

A stock *iso*propanol gel composition was prepared by adding 5 parts of Cabosil M-5, a fumed silica, to 95 parts *iso*propanol with stirring.

2 parts of expanded Perlite Grade EUP/100/28 was added with stirring to 100 parts of the gel.

30 g aliquots of the resultant pasty solid were formed into blocks and ignited in a standard laboratory dish of diameter 65 mm and depth 12 mm and the burning time from ignition to self extinguishing end point was observed. A control lacking perlite was run for comparison. The results obtained were as follows:—

|  | Observed burning time min—sec |
| --- | --- |
| Samples with 2% Perlite | 22—00 |
| Sample with no Perlite | 15—30 |

Thus, it may be seen that the burning time for a composition according to the present invention was protracted as compared with the control, signifying an increase in the efficiency of utilisation of *iso*propanol. Carbosil is a registered Trade Mark.

Example 2

Expanded Perlite grade EUP/100/28 was added to portions of the stock gel of Example 1 at increasing levels and the burning times were observed for 30 g blocks of the soft, pasty solid resulting, in a standard laboratory dish as in Example 1 with a control lacking the expanded perlite.

The results obtained were as follows:—

| %age w/w Perlite | Observed burning time min—sec |
| --- | --- |
| None (Control) | 15—30 |
| 0.5 | 17—45 |
| 1 | 18—30 |
| 2 | 22—00 |
| 3 | 25—50 |
| 5 | 16—10 |

At 5% Perlite, masking caused by slow liberation of fuel prematurely extinguished the flame leaving an amount of fuel unburnt.

There is significant protraction in burning time in most of these samples compared with the control; yet the amount of liquefiable fuel present decreases with increase in concentration of the perlite. That is to say an improvement in efficiency of burning the fuel occurs.

Example 3

An ethanol gel was prepared as in Example 1 replacing the *iso*propanol by industrial methylated spirits.

Burning tests were conducted on 30 g blocks on mixtures of the gel with various concentrations of the expanded Perlite as used in Example 1 prepared by mixing with stirring to form a pasty non-separating solid. The burning tests paralleled those of Example 1:—

| %age w/w Perlite | Observed burning time min—sec |
|---|---|
| i. None (control) | 18—30 |
| ii. 1 | 20—10 |
| iii. 2 | 23—45 |
| iv. 3 | 24—00 |
| v. 4 | 24—00 |
| vi. 5 | 22—30 |

At 5% Perlite, masking caused by slow liberation of fuel prematurely extinguished the flame leaving an amount of fuel unburnt.

| | i | ii | iii | iv | v | vi |
|---|---|---|---|---|---|---|
| Mean sample weight (g) | 30 | 30 | 30 | 30 | 30 | 30 |
| Observed burning time (min.) | 18.5 | 20.17 | 23.75 | 24.00 | 24.00 | 22.50 |
| %age w/w ethanol in sample | 95 | 94.05 | 93.10 | 92.15 | 91.2 | 90.25 |
| Burning time per g of ethanol in the sample | 0.65 | 0.71 | 0.85 | 0.87 | 0.88 | 0.83 |

Thus it may be seen that at up to 5% Perlite inclusion protraction of the burning time occurs and simultaneously there is increased efficiency in alcohol utilisation.

Example 4

A kerosene gel was prepared as in Example 1 replacing the *iso*propanol with kerosene.

Burning tests analogous to those in the previous Examples were conducted on 30 g blocks of mixtures of the gel with various concentrations of the expanded Perlite as used in Example 1. The mixtures were prepared by admixture with stirring using a folding action of the appropriate amounts of gel and expanded Perlite:—

| | i | ii | iii | iv | v | vi |
|---|---|---|---|---|---|---|
| Mean sample weight (g) | 30 | 30 | 30 | 30 | 30 | 30 |
| Observed burning time (min.) | 17.67 | 19.17 | 18.50 | 19.17 | 18.08 | 19.25 |
| %age w/w kerosene in sample | 95 | 94.05 | 93.10 | 92.15 | 91.20 | 90.25 |
| Burning time per g of kerosene in the sample (min.) | 0.62 | 0.68 | 0.66 | 0.69 | 0.66 | 0.71 |

Thus, it may be seen that at up to 5% Perlite inclusion, protraction of the burning time occurs and simultaneously there is increased efficiency in kerosene utilisation, although the rate of change in this example is clearly different from that in Example 3.

4

A consideration of the above examples shows that the compositions of the invention tested exhibit various surprising advantages over the controls.

First it has been found that a large reduction in density of the combustible composition may result from the addition of expanded perlite, whilst the observed burn time (duration of burn in minutes per unit size of block of material) seems not to be reduced indicating an improvement in the efficiency in the utilization of the liquefiable fuel per unit volume of product.

The reduction in density is in itself advantageous since the bigger product may be produced without using extra fuel or the existing size of product may be maintained with a fuel saving.

Whilst in many cases the incorporation of expanded perlite improves the efficiency of burning of the fuel, it is at present not clear how this effect is achieved. It could be due to the structure of the expanded perlite. In the case of the more solid compositions, the perlite may merely provide a more or less rigid structure within a burning block preventing the slight shrinkage effect which normally accompanies collapse of the block during burning, with consequent improvement of burning. Solid blocks exemplified above show an efficiency of fuel burning which tends towards the efficiency of so-called "white firelighter" in burning liquefiable fuel.

Again it may be due to a heat insulative effect of the perlite causing reduced heat flow to the fuel in the interior of the block resulting in a reduced rate of vaporisation at the burning surface, or some combination of these effects.

Our copending European Patent Application No. 81303884.1 (EP.A.47125) describes and claims a combustible composition which does not flow substantially during combustion comprising a fuel in the form of a wax or paste and characterised in that there is expanded perlite dispersed therein serving to decrease the rate at which the fuel burns on combustion of the composition, and optionally a combustible filler material, provided that when the composition comprises a combustible filler material and the composition is one which has been formed hot, the composition contains from 0.5 to 6% by weight of the expanded perlite.

Our copending European Patent Application No. 81303880.9 (EP.A.47123) describes and claims a combustible composition which does not flow substantially during combustion comprising a fuel in the form of a wax, gel or paste and characterized in that there is dispersed therein an inorganic particulate non-combustible solid serving to decrease the rate at which the fuel burns on combustion of the composition and optionally a combustible filler material, and wherein the composition contains from 1 to 6% by weight of the inorganic particulate non-combustible solid which is chalk, china clay, diatomaceous earth, perlite rock, sand, inorganic microspheres obtained from boiler ash, vermiculite, talc or expanded vermiculite, provided that the fuel is other than a kerosene thickened with soap.

## Claims

1. A block of a combustible composition comprising a gelled liquid or liquefiable fuel characterised in that the composition is having expanded perlite dispersed therein.

2. A block as claimed in Claim 1 further characterised in that the fuel is a hydrocarbon oil, or an alcohol.

3. A block as claimed in Claim 1 of Claim 2 further characterised in that the fuel is gelled with a soap, carboxymethyl cellulose, hydroxymethyl cellulose, hydroxypropyl cellulose, nitrocellulose, a gum, a shellac, a rosin, a lignosulphate, a tall oil cut, a quebrancho extract, a caseinate, gelatin, a higher alcohol, polybutanol, ethylene copolymer, polyvinyl alcohol, polyvinyl acetate, vinyl cellulose, polyketone, polyester, phenoxy resin, polymeric diol, vinyl butyral resin, vinyl acetate/polyvinyl chloride copolymer, N-cocohydroxybutyramide, a polyamide, a thickening clay or silica xerogel.

4. A block as claimed in any preceding claim further characterised by containing up to 8% by weight of expanded perlite.

5. A block as claimed in Claim 4 further characterised by containing from 1 to 6% by weight of expanded perlite.

6. A block as claimed in any preceding claim further characterised in that the expanded perlite is of an average particle size of about 0.8 mm or less and has a bulk density of from 40 to 60 kg/m³.

7. A method for producing a combustible composition comprising forming a mixture comprising gelled liquid or liquefiable fuel and expanded perlite and forming the mixture into blocks.

## Patentansprüche

1. Ein Block aus einer brennbaren Zusammensetzung, die eine gelierte Flüssigkeit, oder einen verflüssigbaren Brennstoff enthält, dadurch gekennzeichnet, daß die Zusammensetzung expandierten Perlit dispergiert enthält.

2. Ein Block nach Anspruch 1, dadurch gekennzeichnet, daß der Brennstoff ein Kohlenwasserstofföl oder ein Alkohol ist.

3. Ein Block nach Anspruch 1 oder 2, dadurch gekennzeichnet, daß der Brennstoff mit Seife Carboxymethylcellulose, Hydroxymethylcellulose, Hydroxypropylcellulose, Nitrocellulose, einen Gummi, einen Schellack, einem Geigenharz, einem Lignolsulfat, einem großen Ölschnitt, einem Quebrachoextrakt, einem Kaseinat, einer Gelatine, einem höheren Alkohol, Polybutanol, Äthylcopolymer, Polyvinylalkohol, Polyvinylacetat, Vinylcellulose, Polyketone, Polyester, Phenoxyharze, polymere Diole, Vinylbutyralharz, Vinylacetat/Polyvinylchloridcopolymer, N-Cocohydroxybutyramid, einem Polyamid, einem verdickenden Lehm oder Silicaxerogel geliert ist.

4. Ein Block nach einem der vorgehenden Ansprüche, dadurch gekennzeichnet, daß er bis zu 8 Gew.-% an expandiertem Perlit enthält.

5. Ein Block nach Anspruch 4, dadurch gekennzeichnet, daß er 1 bis 6 Gew.-% an expandiertem Perlit enthält.

6. Ein Block nach einem der vorhergehenden Ansprüche, dadurch gekennzeichnet, daß der expandierte Perlit eine Durchschnittliche Teilchengröße von ungefähr 0,8 mm oder weniger hat und daß er eine Schüttdichte von 40 bis 60 kg/m$^3$ hat.

7. Ein Verfahren zur Herstellung einer brennbaren Zusammensetzung, die eine Mischung enthält, die dadurch gekennzeichnet ist, daß sie eine gelierte Flüssigkeit oder einen verflüssigbaren Brennstoff und expandierten Perlit enthält und daß die Mischung zu Blöcken geformt wird.

**Revendications**

1. Un bloc d'une composition combustible contenant un combustible liquide ou liquéfiable gélifié, caractérisé par le fait que la composition contient, à l'état dispersé, de la perlite expansée.

2. Un bloc tel que revendiqué dans la revendications 1, caractérisé en outre en ce que le combustible est une huile hydrocarbure ou un alcool.

3. Un bloc tel que revendiqué dans la revendication 1 ou la revendication 2, caractérisé en outre en ce que le combustible est gélifié avec un savon, de la carboxyméthylcellulose, de l'hydroxyméthylcellulose, de l'hydroxypropylcellulose, de la nitrocellulose, une gomme, une gomme laque, une colophane, un lignosulfate, une coupe de tallol, un extrait de quebracho, un caséinate, de la gélatine, un alcool supérieur, du polybutanol, un copolymère d'éthylène, un alcool polyvinylique, du polyacétate de vinyle, de la vinylcellulose, une polycétone, un polyester, une résine phénoxy, un diol polymère, une résine butyral vinylique, un copolymère d'acétate de vinyle et de polychorure de vinyle, du N-cocohydroxybutyramide, un polyamide, une argile épaississante ou du xérogel de silice.

4. Un bloc tel que revendiqué dans l'une quelconque des revendications précédentes, caractérisé en outre en ce qu'il contient jusqu'à 8% en poids de perlite expansée.

5. Un bloc tel que revendiqué dans la revendication 4, caractérisé en outre en ce qu'il contient de 1 à 6% en poids de perlite expansée.

6. Un bloc tel que revendiqué dans l'une quelconque des revendications précédentes, caractérisé en outre en ce que la perlite expansée a une grosseur moyenne de particules d'environ 0,8 mm ou moins et une masse volumique apparente de 40 à 60 kg/m$^3$.

7. Une méthode de production d'une composition combustible, consistant à faire un mélange de combustible liquide ou liquéfiable gélifié et de perlite expansée et à façonner des blocs de ce mélange.